# EUROPEAN PATENT SPECIFICATION

(11) **EP 3 089 236 B1**
(45) Date of publication and mention of the grant of the patent: **17.06.2020**
(21) Application number: 16167978.2
(22) Date of filing: 02.05.2016
(51) Int. Cl.: H01M 2/10, H01M 2/20, H01M 2/34

(54) **BATTERY PACK**
BATTERIEPACK
PACK BATTERIE

(30) Priority: 30.04.2015 US 201514700992
(43) Date of publication of application: 02.11.2016
(73) Proprietor: Sensors Unlimited, Inc., Princeton, NJ 08540 (US)
(72) Inventor: WIENERS, John A., Morrisville, PA 09067 (US)
(74) Representative: Dehns

(56) References cited:
- GB-A- 2 011 156
- US-A- 5 431 575
- US-A- 6 117 575
- US-A1- 2007 236 170
- US-A1- 2007 275 299

## Description

### BACKGROUND OF THE INVENTION

### 1. Field of the Invention

The present disclosure relates to batteries, and more particularly to battery packs.

### 2. Description of Related Art

Typical commercial battery packs and compartments are designed such that the user must alternate the battery orientation as they are inserted. Many designs require that some portion of the electronics move when the battery pack is opened and closed, requiring repeated flexing of cables or the use of "pogo pins" to connect the stationary and moving parts of the electronics. Both of these methods can negatively affect the reliability of the system due to wear over time.

Such conventional methods and systems have generally been considered satisfactory for their intended purpose. However, there is still a need in the art for improved battery packs. The present disclosure provides a solution for this need.

US 2007/236170 relates to systems and methods for arranging multiple batteries in a housing. GB 2011156 A relates to a holder for a battery or a plurality of batteries. US 6117575 A relates to battery compartments. US 2007/275299 A1 relates to battery recepticles. US 5431575 A relates to battery holders that permit the batteries to be inserted in either or two directions.

### SUMMARY OF THE INVENTION

A battery pack is provided as claimed in claim 1.

A hinged mechanism can alternate the door between an open position for accepting and removing a battery within the battery compartment and a closed position for connecting the electrical contacts with the ends of the batteries.

The electrical contacts and printed circuit board can remain stationary in the housing. The electrical contacts can be spring contacts, such that the battery is configured to engage and compress the spring contacts. The spring contact on the first end can be identical to the spring contact on the second end.

The printed circuit board can include circuitry for reverse polarity protection. The printed circuit board can be configured to reverse the polarity of a battery if it is needed to provide the predetermined voltage at the outlet.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a perspective view of an exemplary embodiment of a battery pack constructed in accordance with the present disclosure, showing battery compartments within a door hinged to a housing;
Fig. 2 is a side view of the battery pack of Fig. 1, showing the printed circuit board and spring contacts coupled to the housing;
Fig. 3 is a side view of the battery pack of Fig. 1, showing the door in an open position to load and unload batteries; and
Fig. 4 is a side view of the battery pack of Fig. 1, showing the door in a closed position with a battery loaded therein.

### DETAILED DESCRIPTION OF THE PREFERRED EMBODIMENTS

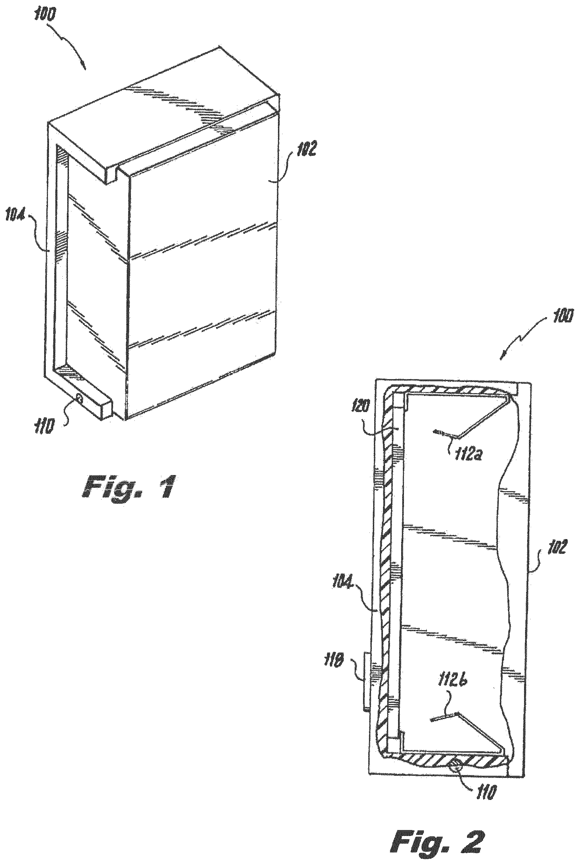

Reference will now be made to the drawings wherein like reference numerals identify similar structural features or aspects of the subject disclosure. For purposes of explanation and illustration, and not limitation, a partial view of an exemplary embodiment of a battery pack in accordance with the disclosure is shown in Fig. 1 and is designated generally by reference character 100. Other embodiments of the battery pack in accordance with the disclosure, or aspects thereof, are provided in Figs. 2-4, as will be described.

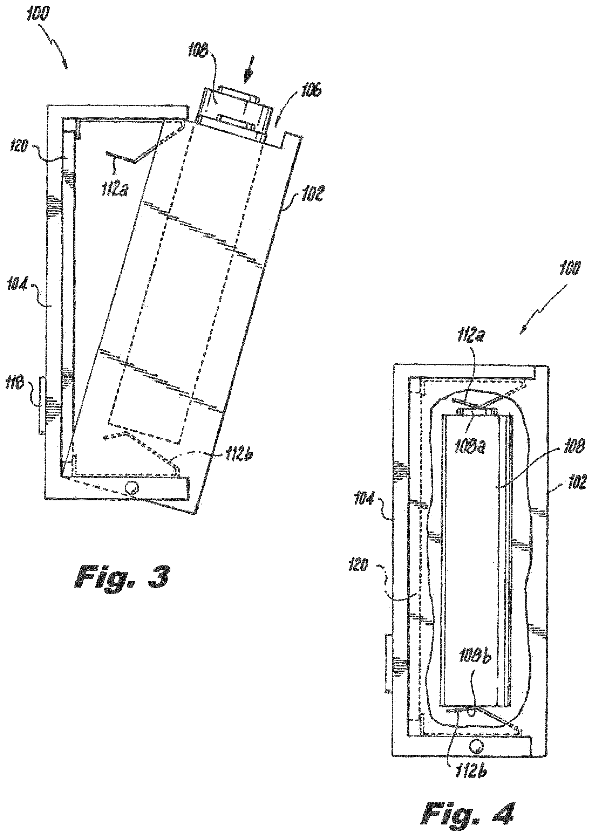

Fig. 1 illustrates a battery pack 100 in accordance with the present disclosure. The battery pack 100 includes a door 102 hingedly coupled to a housing 104. The housing 104 can be mounted to various devices to provide power, for example, the housing can include a Velcro® (a registered trademark by the Velcro Company, headquartered in Amsterdam) backing to couple the housing to a uniform or the housing can be mounted within a helmet to provide power to operational functions of the helmet. The door 102 includes a plurality of battery compartments 106 (shown in Fig. 3) for accepting a battery 108 therein. It will be understood that the battery pack 100 can be manufactured with an extended housing 104 for as many battery compartments 106 as needed. The battery compartments 106 are shown as known in the art for AA batteries with rounded edges. It will be understood that the battery compartments 106 can be any shape or size to accept various size voltage batteries without departing from the scope of the disclosure. A hinged mechanism 110 couples the door 102 to the housing 104. The hinged mechanism 110 allows the door 102 to alternate between an open position (shown in Fig. 3) for loading/unloading a battery into/out of the respective battery compartment and a closed positioned (shown in Figs. 1, 2 and 4).

As shown in Fig. 2, a plurality of electrical contacts 112a, 112b are coupled to the housing for electrical connection to each respective end 108a, 108b of the battery 108. More specifically, a plurality of first electrical contacts 112a are configured for electrical contact with a first end 108a of the battery 108 and a plurality of second electrical contacts 112b are configured for electrical contact with a second end 108b of the battery 108 (shown in Fig. 4). Two electrical contacts 112a, 112b are shown in Fig. 1, but the battery pack 100 can include additional electrical contacts 112a, 112b for additional battery compartments 106. The first and second electrical contacts 112a, 112b can be spring contacts, such that the battery 108 is configured to engage the spring contacts when the door 102 is in the closed position, as shown in Fig. 4. The electrical contacts 112a, 112b can be identical, however, the electrical contacts 112a, 112b can also be different forms of electrical contacts known in the art without departing from the scope of the present disclosure. An outlet 118 is coupled to the housing 104 to supply power from the electrical contacts 112a, 112b to a device, for example, a helmet mounted device.

The housing 104 further includes a printed circuit board (PCB) 120 opposite the door 102. The printed circuit board 120 is in communication with the electrical contacts 112a, 112b and configured to dictate the connection between the batteries 108 as either series or parallel and supply a predetermined voltage to the outlet 118 when a positive end 108a of each respective battery 108 within the battery compartment 106 is in electrical communication with the respective first electrical contact 112a. In other words, as long as the batteries are loaded such that the positive end 108a of the battery 108 is connected to the first electrical contact 112a and a negative end 108b of the battery 108 is connected to the second electrical contact 112b for each respective battery compartment 106, the PCB 120 automatically connects the batteries 108 as needed. This allows a user to easily and single handedly remove and insert the batteries 108 without wasting time for determining if the battery is loaded in the correct direction. The PCB 120 remains stationary with the housing improving reliability of the battery pack 100 and allowing the designer to configure the batteries 108 in any combination of positive-negative polarity orientation. Further, the PCB 120 can include circuitry for reverse polarity protection and be configured to reverse the polarity of a battery if it is needed to provide the predetermined voltage at the outlet 118.

The methods and systems of the present disclosure, as described above and shown in the drawings, provide for a battery pack with superior properties including a printed circuit board to dictate connection between the batteries regardless of orientation. While the apparatus and methods of the subject disclosure have been shown and described with reference to preferred embodiments, those skilled in the art will readily appreciate that changes and/or modifications may be made thereto without departing from the scope of appended claims.

## Claims

1. A battery pack, comprising:
a door (102) hingedly coupled to a housing (104), the door having a plurality of battery compartments (106), each battery compartment configured to accept a single battery (108) therein;
each battery compartment having a first electrical contact (112a) on a first end of the housing and a second electrical contact (112b) on a second end, opposite the first end, of the housing for electrical connection to respective ends of a respective battery;
an outlet (118) for supplying power from the electrical contacts; and
a printed circuit board (120) opposite the door in communication with the electrical contacts configured to connect the batteries in either a series or parallel configuration and to supply a predetermined voltage to the outlet when a positive end of each respective battery within the battery compartments is in electrical communication with the respective first electrical contact.

2. The battery pack of claim 1, wherein the outlet is coupled to the housing.

3. The battery pack of claim 2, further comprising a hinged mechanism (110) to alternate the door between an open position for accepting and removing a battery within the battery compartment and a closed position for connecting the electrical contacts with the ends of the batteries.

4. The battery pack of claim 2 or 3, wherein the electrical contacts and printed circuit board remain stationary in the housing.

5. The battery pack of claim 2, 3 or 4, wherein the electrical contacts are spring contacts, such that the battery is configured to engage and compress the spring contacts.

6. The battery pack of claim 5, wherein the spring contact on the first end is identical to the spring contact on the second end.

7. The battery pack of any of claims 2 to 6, wherein the printed circuit board includes circuitry for reverse polarity protection.

8. The battery pack of any of claims 2 to 7, wherein the printed circuit board is configured to reverse the polarity of a battery if needed to provide the predetermined voltage at the outlet.

9. The battery pack of claim 1, further comprising a hinged mechanism (110) to alternate the door between an open position for accepting and removing a battery within the battery compartment and a closed position for connecting the electrical contacts with the ends of the batteries.

10. The battery pack of claim 1 or 9, wherein the batteries move with the door and the electrical contacts and printed circuit board remain stationary in the housing.

11. The battery pack of claim 1, 9 or 10, wherein the electrical contacts are spring contacts, such that the battery is configured to engage and compress the spring contacts when the door is in the closed position.

## Patentansprüche

1. Batteriepack, umfassend:
eine Klappe (102), die gelenkig an ein Gehäuse (104) gekoppelt ist, wobei die Klappe eine Vielzahl von Batteriefächern (106) aufweist, wobei jedes Batteriefach dazu ausgelegt ist, eine einzelne Batterie (108) darin aufzunehmen;
wobei jedes Batteriefach einen ersten elektrischen Kontakt (112a) an einem ersten Ende des Gehäuses und einen zweiten elektrischen Kontakt (112b) an einem zweiten Ende gegenüber dem ersten Ende des Gehäuses zur elektrischen Verbindung mit jeweiligen Enden einer jeweiligen Batterie aufweist;
einen Ausgang (118) zum Bereitstellen von Leistung von den elektrischen Kontakten; und
eine Leiterplatte (120) gegenüber der Klappe, die mit den elektrischen Kontakten in Verbindung steht und dazu ausgelegt ist, die Batterien entweder in Reihen- oder in Parallelkonfiguration zu verbinden und eine vorgegebene Spannung an den Ausgang bereitzustellen, wenn ein positives Ende jeder jeweiligen Batterie innerhalb der Batteriefächer in elektrischer Verbindung mit dem jeweiligen ersten elektrischen Kontakt steht.

2. Batteriepack nach Anspruch 1, wobei der Ausgang mit dem Gehäuse gekoppelt ist.

3. Batteriepack nach Anspruch 2, ferner umfassend einen Klappmechanismus (110) zum Hin- und Herbewegen der Klappe zwischen einer geöffneten Stellung zum Aufnehmen und Entnehmen einer Batterie in dem Batteriefach und einer geschlossenen Stellung zum Verbinden der elektrischen Kontakte mit den Enden der Batterien.

4. Batteriepack nach Anspruch 2 oder 3, wobei die elektrischen Kontakte und die Leiterplatte in dem Gehäuse feststehend sind.

5. Batteriepack nach Anspruch 2, 3 oder 4, wobei es sich bei den elektrischen Kontakten um Federkontakte handelt, sodass die Batterie dazu ausgelegt ist, die Federkontakte in Eingriff zu nehmen und zusammenzudrücken.

6. Batteriepack nach Anspruch 5, wobei der Federkontakt an dem ersten Ende identisch mit dem Federkontakt an dem zweiten Ende ist.

7. Batteriepack nach einem der Ansprüche 2 bis 6, wobei die Leiterplatte eine Schaltung zum Verpolungsschutz beinhaltet.

8. Batteriepack nach einem der Ansprüche 2 bis 7, wobei die Leiterplatte dazu ausgelegt ist, die Polarität einer Batterie bei Bedarf umzukehren, um die vorgegebene Spannung am Ausgang bereitzustellen.

9. Batteriepack nach Anspruch 1, ferner umfassend einen Klappmechanismus (110) zum Hin- und Herbewegen der Klappe zwischen einer geöffneten Stellung zum Aufnehmen und Entnehmen einer Batterie in dem Batteriefach und einer geschlossenen Stellung zum Verbinden der elektrischen Kontakte mit den Enden der Batterien.

10. Batteriepack nach Anspruch 1 oder 9, wobei sich die Batterien mit der Klappe bewegen und die elektrischen Kontakte und die Leiterplatte in dem Gehäuse feststehend sind.

11. Batteriepack nach Anspruch 1, 9 oder 10, wobei es sich bei den elektrischen Kontakten um Springkontakte handelt, sodass die Batterie dazu ausgelegt ist, die Federkontakte in Eingriff zu nehmen und zusammenzudrücken, wenn sich die Klappe in der geschlossenen Stellung befindet.

## Revendications

1. Pack batterie, comprenant :
une porte (102) couplée de manière articulée à un boîtier (104), la porte ayant une pluralité de compartiments de batterie (106), chaque compartiment de batterie étant configuré pour accepter une seule batterie (108) à l'intérieur ;
chaque compartiment de batterie ayant un premier contact électrique (112a) sur une première extrémité du boîtier et un second contact électrique (112b) sur une seconde extrémité, opposée à la première extrémité, du boîtier pour une liaison électrique aux extrémités respectives d'une batterie respective ;
une sortie (118) pour fournir de l'énergie depuis les contacts électriques ; et
une carte de circuit imprimé (120) opposée à la porte en communication avec les contacts électriques configurés pour relier les batteries dans une configuration soit en série soit en parallèle et pour fournir une tension prédéterminée à la sortie lorsqu'une extrémité positive de chaque batterie respective à l'intérieur des compartiments de batterie est en communication électrique avec le premier contact électrique respectif.

2. Pack batterie selon la revendication 1, dans lequel la sortie est couplée au boîtier.

3. Pack batterie selon la revendication 2, comprenant en outre un mécanisme articulé (110) pour alterner la porte entre une position ouverte pour accepter et retirer une batterie à l'intérieur du compartiment de batterie et une position fermée pour relier les contacts électriques avec les extrémités des batteries.

4. Pack batterie selon la revendication 2 ou 3, dans lequel les contacts électriques et la carte de circuit imprimé restent fixes dans le boîtier.

5. Pack batterie selon la revendication 2, 3 ou 4, dans lequel les contacts électriques sont des contacts à ressort, de sorte que la batterie est configurée pour mettre en prise et comprimer les contacts à ressort.

6. Pack batterie selon la revendication 5, dans lequel le contact à ressort sur la première extrémité est identique au contact à ressort sur la seconde extrémité.

7. Pack batterie selon l'une quelconque des revendications 2 à 6, dans lequel la carte de circuit imprimé comporte des circuits pour une protection contre l'inversion de polarité.

8. Pack batterie selon l'une quelconque des revendications 2 à 7, dans lequel la carte de circuit imprimé est configurée pour inverser la polarité d'une batterie si nécessaire afin de fournir la tension prédéterminée à la sortie.

9. Pack batterie selon la revendication 1, comprenant en outre un mécanisme articulé (110) pour alterner la porte entre une position ouverte pour accepter et retirer une batterie à l'intérieur du compartiment de batterie et une position fermée pour relier les contacts électriques avec les extrémités des batteries.

10. Pack batterie selon la revendication 1 ou 9, dans lequel les batteries se déplacent avec la porte et les contacts électriques et la carte de circuit imprimé restent fixes dans le boîtier.

11. Pack batterie selon la revendication 1, 9 ou 10, dans lequel les contacts électriques sont des contacts à ressort, de sorte que la batterie est configurée pour mettre en prise et comprimer les contacts à ressort lorsque la porte est en position fermée.
